# EUROPÄISCHE PATENTANMELDUNG

(11) **EP 2 851 223 A1**
(43) Veröffentlichungstag der Anmeldung: **25.03.2015**
(21) Anmeldenummer: 14003153.5
(22) Anmeldetag: 11.09.2014
(51) Int. Cl.: B60H 1/00

(54) **Laderaumzelle und Fahrzeug mit einer Laderaumzelle**

(30) Priorität: 24.09.2013 DE 102013110579
(71) Anmelder: Kerstner GmbH, 68649 Gross-Rohrheim (DE)
(72) Erfinder: Höll, Michel, D - 72534 Hayingen (DE)
(74) Vertreter: Schlimme, Wolfram

(57) **Zusammenfassung**

Eine Laderaumzelle, insbesondere mobile Laderaumzelle, mit einer Wandung eines temperierbaren Raums und einer Heizungsvorrichtung zur Heizung des temperierbaren Raums, wobei zumindest eine Bodenwand (34) der Wandung zumindest bereichsweise beheizbar ausgebildet ist und wobei der beheizbar ausgebildete Teil der Wandung mit einer Heizeinrichtung (7, 9) versehen ist, die mit dem zum temperierbaren Raum weisenden inneren Abschnitt (34') der Wandung in wärmeübertragender Wirkverbindung steht, zeichnet sich dadurch aus, dass die Heizeinrichtung (7) durch eine von Warmluft durchströmbare Anordnung von Kanälen (80, 81, 82, 83, 84, 85, 86, 87) im Inneren der Wandung gebildet ist, wobei die Kanäle ein Kanalsystem (8) von Luftführungskanälen für die in den temperierbaren Raum einzuleitende Warmluft bilden; dass zumindest einige der Kanäle (80, 81, 82, 83) des Kanalsystems (8) an ihrem jeweiligen einen Ende Einströmöffnungen (50, 51, 52, 53) aufweisen, durch die die Warmluft in das Kanalsystem (8) eingeleitet wird; dass zumindest einige der Kanäle (80, 81, 82, 83) des Kanalsystems (8) an ihrem jeweiligen anderen Ende Ausströmöffnungen (54, 55, 56, 57) aufweisen, durch die die Warmluft in den temperierbaren Raum austreten kann, und dass zumindest einige der Kanäle (80, 81, 82, 83, 84, 85, 86, 87) zumindest abschnittsweise mit dem inneren Abschnitt (34') der Wandung in wärmeübertragender Wirkverbindung stehen.

## Beschreibung

Die vorliegende Erfindung betrifft eine Laderaumzelle, insbesondere eine mobile Laderaumzelle, nach dem Oberbegriff des Patentanspruchs 1. Sie betrifft weiterhin ein Fahrzeug, das mit einer solchen Laderaumzelle ausgestattet ist. Insbesondere betrifft die Erfindung auch ein Thermofahrzeug, bei dem die Laderaumzelle als thermisch isolierte Zelle (Thermozelle) ausgebildet ist.

Derartige Laderaumzellen und damit ausgestattete Fahrzeuge sind hinlänglich bekannt und dienen dem Transport von temperaturempfindlicher Ware, wie beispielsweise Obst, Gemüse, Blumen oder auch pharmazeutischen Produkten. Ein Beispiel für ein derartiges Fahrzeug ist aus der EP 2 596 978 A2 bekannt. Insbesondere beim Transport von pharmazeutischen Produkten kommt es darauf an, dass die Temperatur des Raums, in welchem die pharmazeutischen Produkte gelagert sind oder transportiert werden, innerhalb einer vorgegebenen, engen Temperaturbandbreite liegt. Insbesondere bei niedrigen Außentemperaturen im Winter besteht die Gefahr, dass derart temperaturempfindliches und insbesondere kälteempfindliches Ladegut während der Lagerung in der Laderaumzelle zumindest lokal Temperaturen ausgesetzt ist, die außerhalb der erlaubten Temperaturbandbreite liegen. Eine kritische Situation kann beispielsweise dann auftreten, wenn eine in einer kalten Winternacht stark ausgekühlte Laderaumzelle eines Fahrzeugs morgens mit dem temperaturempfindlichen Ladegut beladen wird und die Temperierung der Laderaumzelle erst nach dem Beladen einsetzt wenn das Fahrzeug zu seiner Lieferfahrt aufgebrochen ist.

Aus der DE 42 10 885 A1 ist eine Heizungsvorrichtung für Wandungen von Fahrzeugräumen bekannt, die aus vorgefertigten Plattenelementen bestehen, welche in ihrem Kern eine Schicht aus wärmedämmendem Material aufweisen. An der dem Innenraum zugewandten Oberfläche dieser Elemente ist ein flächenhaftes Heizungssystem vorgesehen, das beispielsweise aus einer Vielzahl von Rohren gebildet ist, die von einem Wärmeträgermedium durchströmt werden. Auf der Innenseite der mit den Rohren versehenen wärmedämmenden Schicht ist eine Deckschicht aus einem mechanisch widerstandsfähigen Material angeordnet. Diese bekannte Heizungsvorrichtung weist somit ein in sich geschlossenes Rohrleitungssystem für ein Wärmeträgermedium auf, welches als Radiatorheizsystem den Fahrzeuginnenraum vorwiegend durch von den Wänden ausgehende Wärmestrahlung erwärmt.

Die DE 198 13 437 A1 zeigt und beschreibt eine temperierbare Laderaumezelle eines Kühlfahrzeugs, deren Wandung vorzugsweise flächig ausgebildete Heizorgane aufweist, die beispielsweise als elektrische Widerstandsheizung ausgebildet sind. Derartige flächige Heizorgane in der Wandung der Laderaumzelle erzeugen ebenfalls eine in den Laderaum gerichtete Wärmestrahlung.

Die Ausstattung des Bodens und der Seitenwände einer Laderaumzelle mit derartigen Flächenheizelementen ist kostenaufwändig und die Wärmeabgabe von den Wänden an die Luft im Innenraum der Laderaumzelle erfolgt sehr langsam.

Die DE 10 2005 016 232 A1 zeigt und beschreibt einen am Boden eines Fußraums eines Kraftfahrzeugs anzuordnenden, flächig ausgebildeten Heiz- und/oder Kühlkörper, der zum Durchleiten eines im Kraftfahrzeug verfügbaren Heiz- und/oder Kühlmittels eingerichtet ist. Dieser Heiz- und/oder Kühlkörper wird von einem Wärmeträgermedium, das in die Vorrichtung eingeleitet wird, durchströmt und tritt aus ihr wieder aus. Bei einer alternativen Ausführungsform wird temperierte Luft in ein in der Vorrichtung vorgesehenes Kanalsystem eingeleitet und tritt großflächig durch einen mit einer Vielzahl von Löchern versehenen Deckel aus. Bei dieser Ausführungsform ist zwischen dem Deckel und dem mit den Kanälen vorgesehenen Wannenelement ein der großflächigen Verteilung der Luft dienendes Element aus einem porösen Abstandsgewebe vorgesehen. Die der Luftführung dienenden Kanäle stehen nicht in unmittelbarem Kontakt mit der nach oben weisenden Wandung, also dem Deckel. Bei diesem Heiz- und/oder Kühlkörper wird der Wärmeübergang durch die aus dem Boden des Fußraums großflächig ausströmende Luft bewirkt.

Aufgabe der vorliegenden Erfindung ist es, eine gattungsgemäße Laderaumzelle und ein gattungsgemäßes Fahrzeug so auszugestalten, dass mit einfachem Aufwand eine schnell wirksame, gleichmäßige Temperierung des temperierbaren Raums im Inneren der Laderaumzelle erfolgt, bei der die auf im temperierbaren Raum gelagerte Güter einwirkende Temperatur im gesamten Raum zuverlässig innerhalb einer vorgegebenen Temperaturbandbreite liegt.

Diese Aufgabe wird durch die Laderaumzelle mit den Merkmalen des Patentanspruchs 1 sowie durch ein mit einer solchen Laderaumzelle ausgestattetes Fahrzeug gelöst.

Bei der erfindungsgemäßen Laderaumzelle, die versehen ist mit einer Wandung eines temperierbaren Raums und mit einer Heizungsvorrichtung zur Heizung des temperierbaren Raums, ist zumindest eine Bodenwand der Wandung zumindest bereichsweise beheizbar ausgebildet. Dazu ist der beheizbar ausgebildete Teil der Wandung mit einer Heizeinrichtung versehen, die mit dem zum temperierbaren Raum weisenden inneren Abschnitt der Wandung, beispielsweise über eine wärmeleitende Kontaktfläche, in wärmeübertragender Wirkverbindung steht.

Die Erfindung zeichnet sich dadurch aus, dass die Heizeinrichtung durch eine von Warmluft durchströmbare Anordnung von Kanälen im Inneren der Wandung gebildet ist, wobei die Kanäle ein Kanalsystem von Luftführungskanälen für die in den temperierbaren Raum einzuleitende Warmluft bilden, dass zumindest einige der Kanäle des Kanalsystems an ihrem jeweiligen einen Ende Einströmöffnungen aufweisen, durch die die Warmluft in das Kanalsystem eingeleitet wird, dass zumindest einige der Kanäle des Kanalsystems an ihrem jeweiligen anderen Ende Ausströmöffnungen aufweisen, durch die die Warmluft in den temperierbaren Raum austreten kann und dass zumindest einige der Kanäle zumindest abschnittsweise mit dem inneren Abschnitt der Wandung in wärmeübertragender Wirkverbindung stehen. Unter dem Begriff "Wandung" werden in dieser Anmeldung alle Begrenzungswände des temperierbaren Raums einschließlich der Stirnwände, der Seitenwände, der Deckenwand und der Bodenwand verstanden.

Durch die erfindungsgemäße Ausgestaltung wird der zum temperierbaren Raum weisende innere Bereich der thermisch isolierenden Wandung zur Wärmeleitung von der hinter diesem Abschnitt gelegenen Heizvorrichtung ausgestaltet. Dieser innere, zum temperierbaren Raum weisende Abschnitt der thermisch isolierenden Wandung muss daher selbst keine wärmeisolierenden Eigenschaften aufweisen, sondern kann gut wärmeleitend ausgebildet sein und kann beispielsweise auf seiner zum temperierbaren Raum weisenden Seite Oberflächeneigenschaften aufweisen, die zur Erfüllung anderer Anforderungen, wie beispielsweise mechanischer Belastbarkeit oder Reinigbarkeit, optimiert ist.

Die erfindungsgemäße Ausbildung der Laderaumzelle ermöglicht es, den Laderaum durch die Kombination des Einleitens von Warmluft in die Laderaumzelle und der gleichzeitigen unmittelbaren Erwärmung des beheizbar ausgebildeten Teils der Wandung schnell auf die gewünschte Temperatur zu bringen und die vorgegebene Innenraumtemperatur des temperierbaren Raums auch unmittelbar an einer Wand, beispielsweise an der Bodenwand, dort wo beispielsweise geladene Güter unmittelbar mit der Wandung in Kontakt geraten, schnell zu erreichen.

Bei der erfindungsgemäßen Laderaumzelle wird die in die Laderaumzelle einzuleitende Warmluft gleichzeitig als Wärmetransportmedium für die unmittelbare Erwärmung des beheizbar ausgebildeten Teils der Wandung genutzt, wobei die dortigen Kanalabschnitte eine Art Radiator bilden. Diese Doppelnutzung der Warmluft erspart das Vorsehen eines zweiten Heizungssystems. Zudem ist es nicht erforderlich, zusätzlich zu den Kanälen für den Transport der Warmluft zu den Ausströmern noch separate Wärmemittelkanäle in der Wandung vorzusehen, denn die Wärmemittelkanäle in der Wandung dienen dem Transport der Warmluft zu den Ausströmern.

Wärme- oder Kälteinseln an von der einströmenden Warmluft nicht erreichbaren Orten der Wandung werden auf diese Weise vermieden. Gerade die Bodenwand, auf der beim Beladen in der Regel die geladenen Güter abgelegt werden, steht nahezu stets mit den Gütern in Flächenberührung, so dass in diesem Kontaktbereich zwischen Gütern und Bodenwand keine Erwärmung durch einen Warmluftstrom erfolgen kann. Durch die erfindungsgemäß beheizbar ausgebildete Wandung, das heißt in diesem Beispielfall durch die beheizbar ausgebildete Bodenwand oder Bodenplatte der Laderaumzelle, wird verhindert, dass die geladenen Güter aufgrund der Wärmeleitung von einer ausgekühlten Bodenplatte ebenfalls ausgekühlt werden und dabei den vorgeschriebenen Temperaturbereich verlassen.

Obwohl die Temperierung des temperierbaren Raums mittels Warmluft und/oder Kaltluft erfolgt, kann selbst dann, wenn ein geladenes Gut unmittelbar mit der Wandung in Berührung steht und in diesem Bereich nicht von der temperierten Luft umströmt werden kann, eine Temperierung des geladenen Guts mittels der in der Warmluft transportierten Wärme von der Wandungsseite her durch Wärmeleitung erfolgen. Dies ist insbesondere im Winter von Vorteil, wenn beispielsweise die Laderaumzelle oder das Fahrzeug über Nacht unter Einfluss tiefer Temperaturen ausgekühlt ist und am nächsten Tag beladen werden soll. Selbst dann, wenn die geladenen Güter anfänglich unmittelbar auf oder an der kalten ausgekühlten Wandung anliegen, kann durch die erfindungsgemäß ausgebildete beheizbare Wandung dieser Bereich der Wandung auch dann schnell erwärmt werden, wenn er aufgrund der Kontaktierung mit dem geladenen Gut nicht von temperierter Luft beströmt werden kann.

Vorteilhaft ist es, wenn zumindest eine Seitenwand und/oder zumindest eine Stirnwand zumindest bereichsweise beheizbar ausgebildet ist. Dadurch kann der gewünschte Effekt der Erwärmung von geladenen Gütern auch dann erzielt werden, wenn diese Güter in flächiger Berührung mit einer Seitenwand oder einer Stirnwand stehen.

Vorzugsweise ist zumindest ein Teil der Wandung thermisch isolierend ausgebildet.

Insbesondere von Vorteil ist es, wenn zumindest der beheizbare Teil der Wandung thermisch isolierend ausgebildet ist.

Weiter vorteilhaft ist es, wenn auf der vom inneren Abschnitt abgewandten Seite der Heizeinrichtung ein thermisch isolierend ausgebildeter Abschnitt der Wandung vorgesehen ist. Der nach außen weisende Abschnitt der thermisch isolierenden Wandung ist dabei aus einem besonders gut thermisch isolierenden Material ausgebildet und übernimmt die Isolationsaufgaben der thermisch isolierenden Wandung.

Besonders vorteilhaft ist eine Ausführungsform, bei der die Heizeinrichtung durch eine von einem warmen Fluid, insbesondere von Warmluft, durchströmbare Anordnung von Kanälen im Inneren der zumindest im Bereich der Kanäle thermisch isolierend ausgebildeten Wandung gebildet ist. Diese Warmluftkanäle, die zwischen dem inneren, gut wärmeleitenden Abschnitt der Wandung und dem thermisch isolierenden Abschnitt der Wandung vorgesehen sind und beispielsweise in den thermisch isolierenden Abschnitt eingearbeitet sein können, können gleichzeitig als Luftführungskanäle für die in den temperierbaren Raum einzuleitende Warmluft dienen. Auf diese Weise erfüllen die Kanäle gleichzeitig zwei Aufgaben, nämlich die der Luftführung für die in den temperierbaren Raum einzuleitende Warmluft und die Aufgabe, Warmluft zur Abgabe von Wärme an den inneren wärmeleitenden Abschnitt der Wandung an diesem inneren wärmeleitenden Wandungsabschnitt vorbeizuführen.

Es kann auch von Vorteil sein, wenn zusätzlich zur Warmluft-Heizeinrichtung eine elektrische Heizeinrichtung vorgesehen ist. Mittels solch einer elektrischen Zusatz-Heizeinrichtung kann beispielsweise eine Erwärmung der Wandung, und insbesondere von deren Bodenwand, auch dann erfolgen, wenn bei kaltem Motor des Fahrzeugs noch keine Warmluft zur Verfügung steht oder wenn beispielsweise bei Elektrofahrzeugen die Erzeugung von Warmluft aufwändig und verlustreich ist. Gerade im letzteren Fall kann eine elektrische Beheizung zumindest eines Teils der Wandung, zu der auch der Boden der Laderaumzelle gehört, eine schnell wirksame Temperierung der Innenseite der Wandung bewirken.

Besonders vorteilhaft hinsichtlich einer kostengünstigen Herstellbarkeit ist eine Ausführungsform, die sich dadurch auszeichnet, dass zumindest der beheizbar ausgebildete Teil der thermischen isolierenden Wandung als Sandwichkonstruktion mit einer zum temperierbaren Raum weisenden inneren Schicht ausgebildet ist, die eine bessere Wärmeleitfähigkeit aufweist, als die vom temperierbaren Raum abgewandte äußere Isolationsschicht. Bei einer solchen Sandwichkonstruktion kann die thermisch isolierende Wandung bedarfsgerecht auf der Innenseite mit einem gut wärmeleitenden, mechanisch belastbaren und gut reinigbaren Material versehen sein, während die nach außen weisenden Abschnitte der thermisch isolierenden Wandung aus thermisch isolierendem Material, beispielsweise einem PU-Schaum, gebildet sind.

Besonders von Vorteil ist dabei, wenn die Kanäle durch nutartige Ausnehmungen in der zum temperierbaren Raum weisenden Oberfläche der äußeren Isolationsschicht gebildet sind, wobei diese nutartigen Ausnehmungen von der inneren Schicht abgedeckt sind. Bei dieser Ausgestaltung einer Sandwich-Wandung können beispielsweise die Kanäle in den äußeren, aus thermisch isolierendem Material bestehenden Abschnitt der Wandung eingearbeitet, beispielsweise eingefräst oder anderweitig eingeformt sein und die offenen nutartigen Kanäle werden dann von der inneren, gut wärmeleitenden Schicht abgedeckt.

Vorzugsweise ist die zum temperierbaren Raum weisende innere Schicht der Wandung mit den Ausströmöffnungen versehen, die einerseits in den temperierbaren Raum und andererseits in einen der Kanäle im Inneren der Wandung münden. Diese Ausströmöffnungen, die die bereits erwähnte Doppelnutzung der Kanäle als Heizeinrichtung und als Luftführungseinrichtung für die in den temperierbaren Raum einzuleitende Warmluft ermöglichen, können in der Bodenwand oder in den Seitenwänden vorgesehen sein. Vorzugsweise ist zumindest ein Teil der Ausströmöffnungen am Rand der Bodenwand unmittelbar den Seitenwänden benachbart oder im jeweiligen unteren Bereich der Seitenwände vorgesehen, wodurch die dort ausströmende Warmuft gleichzeitig einen Warmluftvorhang vor den Seitenwänden erzeugen kann, was zu einer Temperaturstabilisierung in der Laderaumzelle positiv beiträgt. Die Anordnung der Ausströmöffnungen im unteren Bereich der Seitenwände ermöglicht es, die Bodenwand - zumindest großflächig - geschlossen und glatt und daher leicht reinigbar auszugestalten.

Ein besonders bevorzugter Einsatz der erfindungsgemäßen Laderaumzelle erfolgt bei einem Fahrzeug, bei dem beispielsweise der Laderaum oder ein Teil des Laderaums mit einer erfindungsgemäßen Laderaumzelle ausgestattet ist. Vorzugsweise ist dabei die Zelle als Thermozelle ausgebildet, wodurch das Fahrzeug zu einem Thermofahrzeug wird.

Die Erfindung wird nachfolgend anhand eines Beispiels unter Bezugnahme auf die Zeichnung näher erläutert; in dieser zeigt:
- **Fig. 1**: eine teilweise geschnittene Darstellung eines Fahrzeugs mit einer erfindungsgemäßen Laderaumzelle;
- **Fig. 2**: eine teilweise geschnittene Draufsicht auf eine Bodenplatte als Wandungsabschnitt einer erfindungsgemäßen Laderaumzelle; und
- **Fig. 3**: einen Vertikalschnitt durch die Bodenplatte entlang der Linie III-III in Fig. 2.

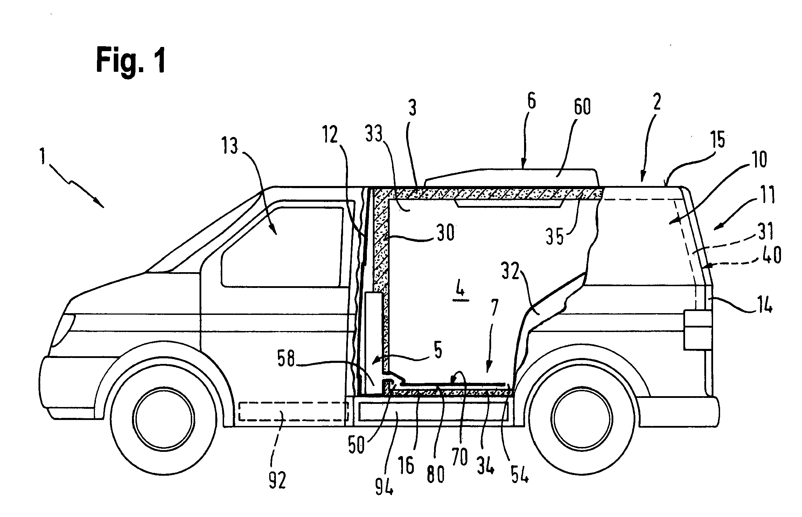

In Fig. 1 ist in teilweise geschnittener Ansicht ein mit einer als Thermozelle ausgebildeten Laderaumzelle 2, also mit einer temperierbaren, thermisch isolierten Zelle, ausgestattetes Fahrzeug 1 als Thermofahrzeug dargestellt. Die temperierbare, thermisch isolierte Zelle 2 ist in den Laderaum 10 des als Kastenwagen ausgebildeten Thermofahrzeugs 1 integriert. Die Erfindung ist jedoch nicht auf Kastenwagen beschränkt, sondern kann auch in Kombiwagen, in Lastkraftwagen oder auch nur in nicht auf einem Fahrzeug angeordneten mobilen oder stationären Laderaumzellen verwirklicht sein.

Das Gehäuse der eine thermisch isolierte Zelle bildenden Thermozelle 2 wird von dem im hinteren Bereich der Fahrzeugkarosserie 11 des Thermofahrzeugs 1 gelegenen Laderaum 10 gebildet, der innen mit einer thermisch isolierenden Wandung 3 versehen ist. Dabei ist die vordere Gehäusewand der Thermozelle 2 von oder an einer Rückwand 12 der Fahrerkabine 13 gebildet. Der hintere Bereich der Fahrzeugkarosserie 11, die Rückwand 12 der Fahrerkabine 13 und die Heckklappe 14 bilden zusammen mit dem Fahrzeugdach 15 und dem Laderaumboden 16 das äußere Gehäuse der Thermozelle 2, das auf der Innenseite mit der thermisch isolierenden Wandung 3 versehen ist. Die thermisch isolierende Wandung weist somit eine vordere Stirnwand 30, eine hintere Stirnwand 31, eine linke Seitenwand 32, eine rechte Seitenwand 33, eine untere Bodenwand 34 und eine obere Deckenwand 35 auf.

Der Zugang zu dem einen temperierbaren Raum 4 bildenden Innenraum der Thermozelle 2 erfolgt durch die am Heck des Fahrzeugs vorgesehene Hecktür oder Heckklappe 14, die auf der Innenseite isoliert ist und so einen Abschnitt der hinteren Stirnwand 31 der isolierenden Wandung 3 darstellt. Die Hecktür oder Heckklappe 14 bildet eine thermisch abdichtend verschließbare Zugangsöffnung 40 für den temperierbaren Raum 4. Auch eine oder zwei seitliche thermisch isolierend ausgebildete und thermisch abdichtend verschließbare Türen können vorgesehen sein.

Eine nur schematisch gezeigte Heizungsvorrichtung 5 und eine ebenfalls nur schematisch gezeigte Kühlvorrichtung 6 dienen zur Heizung beziehungsweise zur Kühlung, also zur Temperierung, des temperierbaren Raums 4, wobei eine nicht gezeigte Regeleinrichtung die Heizungsvorrichtung 5 und die Kühlvorrichtung 6 sowie über entsprechende Gebläse 58, 60 die Luftströmungen von der Heizungsvorrichtung 5 und der Kühlvorrichtung 6 in den temperierbaren Raum 4 regelt, um eine vorgebbare Temperatur im temperierbaren Raum 4 zu erzielen.

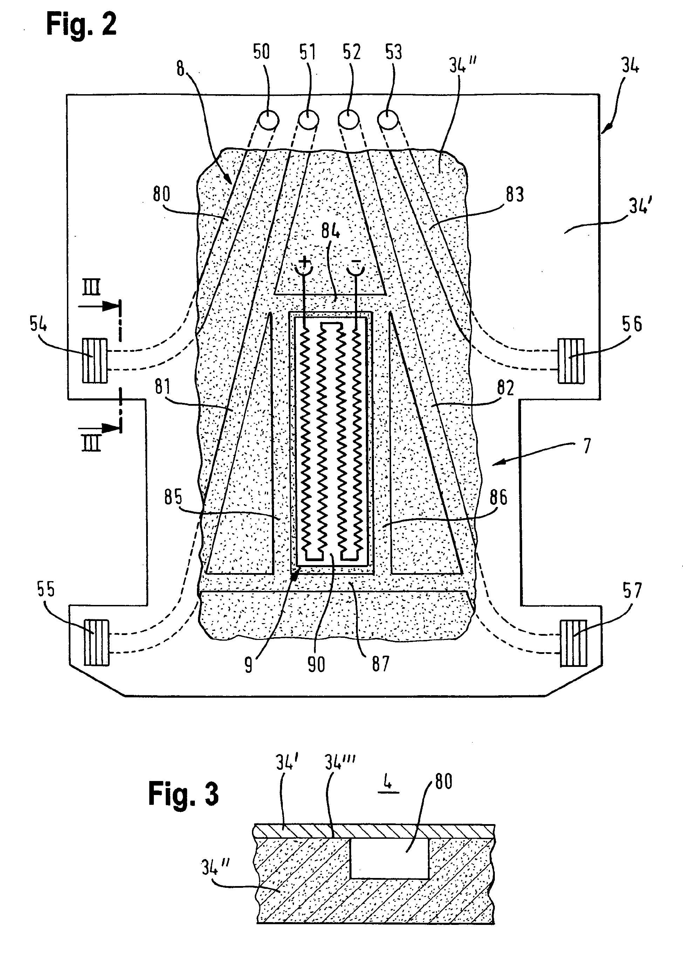

Zumindest ein Teil der von der Heizungsvorrichtung 5 in den temperierbaren Raum 4 geleiteten Warmluft wird durch Einströmöffnungen 50, 51, 52, 53 (Fig. 2) in ein Kanalsystem 8 eines in der unteren Bodenwand 34 der thermisch isolierenden Wandung 3 ausgebildeten Heizwärmetauschers 70 eingeleitet, durch Kanäle 80, 81, 82, 83 des Kanalsystems 8 geführt und tritt durch in der Wandung 3 vorgesehene Ausströmöffnungen 54, 55, 56, 57 in den temperierbaren Raum 4 aus. Im Detail wird dies nachstehend anhand der Fig. 2 beschrieben.

Auch wenn im hier gezeigten Beispiel nur die untere Bodenwand 34 beheizbar ausgebildet ist, so können auch Bereiche der Stirnwände 30, 31 und/oder Bereiche der Seitenwände 32, 33 und/oder der oberen Deckenwand 35 in entsprechender Weise als Heizwärmetauscher ausgebildet sein. Die Heizwärmetauscher bilden somit eine Heizeinrichtung 7 für die thermisch isolierende Wandung.

In Fig. 2 ist das Kanalsystem 8 in der unteren Bodenwand 34 gezeigt, wobei die Anzahl, die Gestalt und der Verlauf der einzelnen Kanäle nur beispielhaft dargestellt sind. Selbstverständlich ist es dem Fachmann überlassen, diese Parameter konstruktiv so zu wählen, dass der gewünschte Heizeffekt erreicht wird.

Haupt-Luftleitkanäle 80, 81, 82 und 83 verlaufen von den Einströmöffnungen 50, 51, 52 und 53 direkt zu den Ausströmöffnungen 54, 55, 56 und 57. Die inneren Haupt-Luftleitkanäle 81 und 82 sind über Nebenkanäle 84, 85, 86 und 87 zum Zwecke des Druckausgleichs und um auch durch diese Kanäle Warmluft zu führen, miteinander verbunden. Auch die Nebenkanäle 84, 85, 86, 87 können über (nicht gezeigte) Ausströmöffnungen in den temperierbaren Raum 3 münden. Ebenfalls können auch die äußeren Haupt-Luftleitkanäle 80 und 83 über (nicht gezeigte) Nebenkanäle mit den inneren Haupt-Luftleitkanälen 81, 82 verbunden sein.

In Fig. 3 ist der Aufbau eines als Sandwichkonstruktion ausgeführten und mit Heizkanälen versehenen Abschnitts der thermisch isolierenden Wandung 3 gezeigt.

Auf der zum temperierbaren Raum 4 weisenden Seite ist ein, eine innere Schicht der Sandwichkonstruktion bildender, innerer Wandungsabschnitt 34' aus gut wärmeleitendem und mechanisch stabilem Material vorgesehen. Dieser innere Wandungsabschnitt 34' ist fest mit dem darunter liegenden, eine äußere Schicht der Sandwichkonstruktion bildenden äußeren Wandungsabschnitt 34" aus gut wärmeisolierendem Material verbunden, zum Beispiel verklebt oder verschweißt. Die Kanäle, von denen in Fig. 3 nur der Kanal 80 zu sehen ist, sind von nutartigen Ausnehmungen in der zum inneren Wandungsabschnitt 34', also zum temperierbaren Raum 4, weisenden Oberfläche 34"' des äußeren Wandungsabschnitts 34" gebildet, wobei diese nutartigen Ausnehmungen oben offen sind und von dem inneren Wandungsabschnitt 34' beim Zusammenfügen der Sandwichkonstruktion verschlossen werden. Dadurch begrenzt der innere Wandungsabschnitt 34', genauer gesagt ein Teil davon, die Kanäle auf der zum temperierbaren Raum 4 weisenden Innenseite der Kanäle, so dass die durch die Kanäle hindurchströmende Luft mit diesem Teil des inneren Wandungsabschnitts 34' in Kontakt gerät, wobei ein Wärmeaustausch zwischen der Luft und dem inneren Wandungsabschnitt 34' erfolgt.

Wie in Fig. 2 auch gezeigt ist, kann eine elektrische Heizmatte 90 einer elektrischen Heizeinrichtung 9 im Sandwichaufbau der thermisch isolierenden Wandung 3, beispielsweise zwischen dem äußeren Wandungsabschnitt 34" und dem inneren Wandungsabschnitt 34' vorgesehen sein. Diese elektrische Heizeinrichtung 9 kann als Ergänzung zusätzlich zu der vorstehend beschriebenen Warmluft-Heizung der thermisch isolierenden Wandung 3 vorgesehen sein. Durch eine solche Ergänzung lassen sich beispielsweise auch Bereiche der thermisch isolierenden Wandung beheizen, durch die eine Warmluftführung nicht oder nur unter großem Aufwand vorgesehen werden kann. Zur Stromversorgung der elektrischen Heizeinrichtung 9 sind extern und/oder von einem Fahrzeuggenerator aufladbare Batterien 92, 94 im Fahrzeug vorgesehen.

Die Erfindung ist nicht auf das obige Ausführungsbeispiel beschränkt, das lediglich der allgemeinen Erläuterung des Kerngedankens der Erfindung dient. Obwohl im gezeigten und beschriebenen Beispiel eine mit einer erfindungsgemäß beheizbaren Bodenwand versehene Thermozelle vorgesehen ist, kann die Erfindung auch dann verwirklicht sein, wenn ausschließlich eine erfindungsgemäß beheizbare Bodenplatte in einer herkömmlichen nicht oder nur teilweise thermisch isolierten Laderaumzelle vorgesehen ist.

Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Laderaumzelle, insbesondere mobile Laderaumzelle, mit
- einer Wandung (3) eines temperierbaren Raums (4) und
- einer Heizungsvorrichtung (5) zur Heizung des temperierbaren Raums (4),
- wobei zumindest eine Bodenwand (34) der Wandung (3) zumindest bereichsweise beheizbar ausgebildet ist und
- wobei der beheizbar ausgebildete Teil der Wandung (3) mit einer Heizeinrichtung (7, 9) versehen ist, die mit dem zum temperierbaren Raum weisenden inneren Abschnitt (34') der Wandung (3) in wärmeübertragender Wirkverbindung steht,
**dadurch gekennzeichnet,**
- **dass** die Heizeinrichtung (7) durch eine von Warmluft durchströmbare Anordnung von Kanälen (80, 81, 82, 83, 84, 85, 86, 87) im Inneren der Wandung (3) gebildet ist, wobei die Kanäle ein Kanalsystem (8) von Luftführungskanälen für die in den temperierbaren Raum einzuleitende Warmluft bilden;
- **dass** zumindest einige der Kanäle (80, 81, 82, 83) des Kanalsystems (8) an ihrem jeweiligen einen Ende Einströmöffnungen (50, 51, 52, 53) aufweisen, durch die die Warmluft in das Kanalsystem (8) eingeleitet wird;
- **dass** zumindest einige der Kanäle (80, 81, 82, 83) des Kanalsystems (8) an ihrem jeweiligen anderen Ende Ausströmöffnungen (54, 55, 56, 57) aufweisen, durch die die Warmluft in den temperierbaren Raum (4) austreten kann;
- **dass** zumindest einige der Kanäle (80, 81, 82, 83, 84, 85, 86, 87) zumindest abschnittsweise mit dem inneren Abschnitt (34') der Wandung (3) in wärmeübertragender Wirkverbindung stehen.

2. Laderaumzelle nach Anspruch 1,
**dadurch gekennzeichnet,**
**dass** zumindest eine Stirnwand (30, 31) und/oder zumindest eine Seitenwand (32, 33) der Wandung (3) zumindest bereichsweise beheizbar ausgebildet ist.

3. Laderaumzelle nach einem der vorhergehenden Ansprüche,
**dadurch gekennzeichnet,**
**dass** zumindest ein Teil der Wandung (3) thermisch isolierend ausgebildet ist.

4. Laderaumzelle nach Anspruch 4,
**dadurch gekennzeichnet,**
**dass** der beheizbare Teil der Wandung (3) thermisch isolierend ausgebildet ist.

5. Laderaumzelle nach einem der vorhergehenden Ansprüche,
**dadurch gekennzeichnet,**
**dass** auf der vom inneren Abschnitt (34') abgewandten Seite der Heizeinrichtung (7, 9) ein thermisch isolierend ausgebildeten Abschnitt (34") der Wandung (3) vorgesehen ist.

6. Laderaumzelle nach einem der vorhergehenden Ansprüche,
**dadurch gekennzeichnet,**
**dass** zusätzlich zur Warmluft-Heizeinrichtung (7) eine elektrische Heizeinrichtung (9) vorgesehen ist.

7. Laderaumzelle nach einem der vorhergehenden Ansprüche,
**dadurch gekennzeichnet,**
**dass** die Warmluft-Heizeinrichtung (7) durch eine von einem warmen Fluid, insbesondere von Warmluft, durchströmbare Anordnung von Kanälen (80, 81, 82, 83, 84, 85, 86, 87) im Inneren der zumindest im Bereich der Kanäle thermisch isolierend ausgebildeten Wandung (3) gebildet ist.

8. Laderaumzelle nach einem der vorhergehenden Ansprüche,
**dadurch gekennzeichnet,**
**dass** zumindest der beheizbar ausgebildete Teil der Wandung (3) als Sandwichkonstruktion mit einer zum temperierbaren Raum (4) weisenden inneren Schicht (34') ausgebildet ist, die eine bessere Wärmeleitfähigkeit aufweist, als eine vom temperierbaren Raum (4) abgewandte äußere Isolationsschicht (34").

9. Laderaumzelle nach Anspruch 8,
**dadurch gekennzeichnet,**
**dass** die Kanäle (80, 81, 82, 83, 84, 85, 86, 87) durch nutartige Ausnehmungen in der zum temperierbaren Raum (4) weisenden Oberfläche (34"') der äußeren Isolationsschicht (34") gebildet sind, wobei diese nutartigen Ausnehmungen von der inneren Schicht (34') abgedeckt sind.

10. Laderaumzelle nach einem der Ansprüche 7 bis 9,
**dadurch gekennzeichnet,**
**dass** die zum temperierbaren Raum (4) weisende inneren Schicht (34') der Wandung (3) mit den Ausströmöffnungen (54, 55, 56, 57) versehen ist.

11. Fahrzeug mit einer Laderaumzelle gemäß einem der vorhergehenden Ansprüche.
